# EUROPÄISCHE PATENTSCHRIFT

(11) **EP 2 157 226 B1**
(45) Veröffentlichungstag und Bekanntmachung des Hinweises auf die Patenterteilung: **16.10.2013**
(21) Anmeldenummer: 09008373.4
(22) Anmeldetag: 26.06.2009
(51) Int. Cl.: D06C 23/04, D06C 15/00, B32B 27/12, D06M 15/256, D06M 15/705, D06M 23/08, D06M 23/16, B63H 9/06

(54) **Segelmembran**
Sail membrane
Membrane de voile

(30) Priorität: 26.06.2008 DE 102008030447
(43) Veröffentlichungstag der Anmeldung: 24.02.2010
(73) Patentinhaber: Dimension-Polyant GmbH, 47906 Kempen (DE)
(72) Erfinder: Uwe, Stein, 52525 Heinsberg (DE); Schillings, Heiner, 52525 Heinsberg (DE)
(74) Vertreter: Thiel, Christian

(56) Entgegenhaltungen:
- EP-A1- 0 034 189
- EP-A1- 1 516 949
- EP-A2- 0 227 922
- EP-A2- 1 048 232
- WO-A1-00/45658
- WO-A2-2005/039931
- DE-U1- 8 910 535
- US-A- 4 972 522

## Beschreibung

Die Erfindung betrifft eine Segelmembran, ein Verfahren zur Herstellung einer solchen Segelmembran und daraus gefertigte Segel.

Bei der Fertigung von Hochleistungssegeln, auch für Wettbewerbszwecke, steht die Vereinigung einer Reihe von besonderen Eigenschaften im Vordergrund, als da sind niedriges Gewicht, gute Handhabbarkeit, geringe Winddurchlässigkeit, hohe Reißfestigkeit, Elastizität, geringes Wasseraufnahmevermögen, UV-Beständigkeit und dergleichen. Ziel eines jeden Segelherstellers ist die Optimierung dieser Eigenschaften in nur einer Membran für die Segelherstellung.

Aus der EP 0 034 189 A1 ist ein Segeltuch mit einer textilen Basis bekannt, bei der wenigstens eine Oberfläche mit einem Kunststoffüberzug versehen ist, der eine längs paralleler Linien verlaufende, die Luftströmung lenkende Strukturierung aufweist. Die EP 0 227 922 A2 beschreibt einen Flächenverbund, der eine beidseitig mit Folie aus thermoplastischem Kunststoff überzogenes Segeltuch umfasst, wobei der Kunststoff in einem Wellenlängenbereich von 200 bis 380 mm für ultraviolettes Licht undurchlässig ist. Die WO 00/45658 A1 offenbart textile Gewebe mit Eintiefungen eines Durchmessers bis zu 6 mm zur Verbesserung des Luftwiderstandes.

Bei der Herstellung von Segeln ist bislang noch nicht versucht worden, gezielt den Luftwiderstand und die Windschlüpfrigkeit des Materials verbessernde Strukturen in die Oberfläche der Membran einzubringen. Soweit Segelmembrane aus Folien hergestellt werden, haben sie im Wesentlichen eine glatte Oberfläche. Soweit diese Membranen aus Geweben oder Compositen bestehen, was bei hochwertigen und großflächigen Segeln häufig der Fall ist, weist das Segel an seiner Oberfläche die dem Gewebe zu eigenen Webstrukturen auf, ggf. kaschiert durch Folien, modifiziert durch Beschichtungen oder verändert durch Verklebung oder Verschmelzung. Diese Gewebestrukturen nehmen Einfluss auf die aerodynamischen Eigenschaften der Segel und ggf. auf die Winddurchlässigkeit und das Wasseraufnahmevermögen, sind jedoch nicht geeignet, den Luftwiderstand gezielt zu verändern.

Sowohl an glatten als auch an strukturierten Oberflächen, die im Wind stehen, bilden sich Strömungsabrisse und Mikrowirbel, die einen Widerstand darstellen. Durch das gezielte Einbringen von Mikrorauigkeiten in die Oberfläche kann eine Widerstandsverminderung erzielt werden. Hier sind insbesondere Mikrorauigkeiten zu nennen, die geeignet sind, den Turbulenzgrad in der Turbulenzschicht zur Oberfläche des Segels zu vermindern. Solche Mikrorauigkeiten wurden im Flugzeugbau entwickelt und haben vorzugsweise die Form von parallel verlaufenden Riefen oder Rillen längs zur Anströmrichtung der Luft.

Ziel der Erfindung ist es, eine Oberflächenstruktur zu schaffen, die geeignet ist, solche Mikrorauigkeiten in eine Segelstruktur einzubringen und zur Verminderung der Turbulenzen zu nutzen.

Dieses Ziel wird mit einer Segelmembran erreicht, bei der die Oberfläche Mikrorauigkeiten aufweist, die in Form sich parallel erstreckender Riefen mit einer Dichte von 5 bis 25 Riefen/mm auf die Oberfläche auf- oder in diese eingebracht sind, wobei die Riefen ein Rechteck- oder Rautenmuster sich kreuzender Riefenscharen ausbilden.

Erfindungsgemäß wird unter dem Begriff "Segelmembran" ein für die Segelherstellung geeignetes flächiges Material verstanden, das aus einem Gewebe oder einem Verbund aus Gewebe und Folie bestehen kann. Ein solches Gewebe kann beispielsweise aus verschiedenen synthetischen Fasern bestehen, unter Einschluss von Verstärkungsfasern, die auch miteinander verklebt oder thermisch verschweißt sein können. Ein Composit kann, zusätzlich zu dem Gewebe aus synthetischen Fasern, zusätzlich eine Kaschierung mit einer oder mehreren Folien aufweisen.

Die erfindungsgemäße Segelmembran besteht aus einem konventionellen Gewebe aus synthetischen Fasern, wobei es sich um Fasern eines Typs handeln kann oder aber auch um Mischgewebe. Besonders geeignet sind Polyamidfasern, beispielsweise Nylon-6,6, aber auch Polyesterfasern oder Mischfasern aus Polyester und Polyethylen, wie sie beispielsweise in Segeln vom Typ HydraNet^{R} zum Einsatz kommen.

Die Riefendichte beträgt erfindungsgemäß 5 bis 25 Riefen/mm, was einem Kammabstand der Riefen von 200 µm bis 40 µm entspricht, und vorzugsweise 8 bis 20 Riefen/mm, entsprechend 125 µm bis 50 µm Kammabstand.

Die Amplitude der Riefen, d. h. Höhe von den Tälern zwischen zwei Kämmen bis zur Kammhöhe beträgt vorzugsweise 25 bis 75 % des Kammabstandes und insbesondere 40 bis 60 %.

Die Riefen laufen im Wesentlichen alle parallel zueinander und können im Grunde genommen in jeglicher Ausrichtung über das Gewebe verlaufen. Bevorzugt ist aber ein diagonaler Verlauf in einem Winkel von 45° zu den Kett-oder Schussfäden, +/- 15°. Ein im Wesentlichen diagonaler Verlauf von 45° ist besonders bevorzugt, da dieser Verlauf geeignet ist, die Unebenheiten der Oberfläche, insbesondere bei Geweben, am besten zu überspielen.

Die Mikrorauigkeiten in Form von sich parallel erstreckenden Riefen können auf beliebige Art und Weise in die Gewebestruktur oder Folienoberfläche eingebracht oder aufgebracht werden, beispielsweise durch Bedrucken, Einweben, reihenförmiges Aufbringen nanopartikulärer Partikel oder auch durch Einwalzen. Besonders bevorzugt ist das Kalandern mit einer Rillenwalze, wobei die Walze in der Regel auf eine Temperatur erwärmt ist, die unterhalb der Erweichungstemperatur des Folienmaterials oder der Synthesefaser bzw. der niedrigst erweichenden Synthesefaser liegt, vorzugsweise etwa 10°C unterhalb. Zur Verbesserung des Prägeeffekts kann es sinnvoll sein, das Gewebe vor dem Kalandern mit Heißdampf zu behandeln, beispielsweise mit einer Temperatur von 110°C.

Das Kalandern findet bei erhöhter Temperatur unter einem Druck von wenigstens 50 N/mm statt, vorzugsweise bei 100 bis 600 N/mm, insbesondere bei 200 bis 400 N/mm.

Vorzugsweise wird die Segelmembran beidseitig mit einer solchen Rillenwalze kalandert.

Besonders bevorzugt ist bei der erfindungsgemäßen Segelmembran ein Rautenmuster mit sich kreuzenden Riefen, d. h. aus zwei jeweils parallelen Riefenscharen, die sich in einem Winkel von 80° bis 120° kreuzen. Es ergibt sich auf diese Art und Weise ein Rechteck- bzw. Rautenmuster, das im Falle eines Gewebes gegenüber dem normalen Gewebemuster aus sich kreuzenden Kett- und Schussfäden um 45° +/- 15° verdreht ist.

Die erfindungsgemäße Segelmembran kann auf an und für sich bekannte Art und Weise hydrophobiert sein, wobei insbesondere eine Hydrophobierung mit einem Perfluorpolyalkylen in Frage kommt, beispielsweise mit Teflon^{R}. Die Hydrophobierung findet vorzugsweise vor dem Kalandern statt. Wird das Gewebe gefärbt und auf besondere Art und Weise ausgerüstet, so finden der Färbevorgang und die Ausrüstung ebenfalls vor dem Kalandern statt.

Eine Hydrophobierung kann insbesondere auch durch Aufbringen hydrophober Teilchen erzielt werden, beispielsweise durch die Aufbringung von Nanopartikeln, die ein hydrophobes Benetzungsregime nach Cassie-Baxter herrichten. Solche nanopartikulären Beschichtungen können unregelmäßiger Natur sein und sollten insbesondere dimensionsmäßig deutlich hinter dem eingeprägten Rillenmuster zurückbleiben. Die Höhe dieser Partikel sollte einen Wert von 5 µm, insbesondere 2µm nicht überschreiten. Solch ein nanopartikuläre Beschichtung bewirkt, dass sich ansammelnde Wassertropfen nicht die Segelmembran selbst benetzen und dort eindringen, sondern von der Oberfläche abperlen und damit die Wasseraufnahme der Membran vermindern.

Die Erfindung betrifft insbesondere auch ein Verfahren zur Herstellung einer Segelmembran nach einem der vorstehenden Ansprüche, bei dem das Gewebe als Rohware oder Halbfabrikat nach der Erstellung ggf. gefärbt und/oder ausgerüstet wird, danach bei einem Druck von wenigstens 50 N/mm mit einer Riffelwalze zur Einprägung einer Riefenstruktur mit einer Dichte von 5 bis 25 Riefen/mm von wenigstens einer Seite kalandert wird.

Bei dem erfindungsgemäßen Verfahren stellt das Kalandern in der Regel den letzten Schritt zur Herstellung der fertigen Segelmembran dar. Alle Färbe- und Ausrüstungsschritte finden im Vorfeld statt, ebenso evtl. Beschichtungen zur Hydrophobierung. Das Kalandern findet bei erhöhter Temperatur statt, wobei die Riffelwalze auf eine Temperatur aufgeheizt wird, die unterhalb des Erweichungs- bzw. Schmelzpunktes der am niedrigsten schmelzenden Synthesefaser eingestellt wird. Vorzugsweise liegt die Temperatur etwa 10°C unter dem Schmelz- oder Erweichungspunkt. Zur Verbesserung der Einprägung kann Gewebe zuvor einer Wasserdampfbehandlung unterzogen werden, z. B. mit Heißdampf von 110°C. Eine Hydrophobierung, wie vorstehend beschrieben, wird ebenfalls vor dem Kalandern vorgenommen. Weitere Veredlungsschritte, so beispielsweise die Aufbringung nanopartikulärer Schichten zur Erhöhung der Hydrophobie, werden nach dem Kalandern vorgenommen.

Aus der erfindungsgemäßen Segelmembran können auf übliche Art und Weise Segel gefertigt werden. Das Segel wird dazu aus einzelnen Bahnen oder Gewebestücken zusammengesetzt, wobei in an und für sich bekannter Weise die Hauptkraftlinien und die Reißfestigkeit in den verschiedenen Richtungen berücksichtigt werden.

Die Erfindung betrifft entsprechend auch ein aus einer erfindungsgemäßen Segelmembran gefertigtes Segel, insbesondere Segel, die durch strömungsbedingte Druckdifferenz zwischen Lee- und Luvseite des Segels Vortrieb erzeugen.

Es wurde gefunden, dass erfindungsgemäß gefertigte Segelmembrane dank der Riffelstruktur, insbesondere beim Segeln am Wind, weniger Turbulenzen aufweisen und damit einen geringeren Luftwiderstand. Gleichzeitig wird durch das Kalandern die Luftdurchlässigkeit eines Gewebes deutlich vermindert, so dass in der Regel auf eine Beschichtung oder Verdichtung durch die Einbringung von Füllmaterialien oder Klebstoffen verzichtet werden kann. Dennoch kann die ohnehin geringere Luftdurchlässigkeit durch herkömmliche Beschichtungsmaßnahmen weiter vermindert und auf 0 gesenkt werden, wofür dann weniger Beschichtungsmaterial benötigt wird.

Das Einkalandern der Riffelstruktur verbessert zudem die Griffigkeit des Segels und damit das Handling. Die Reißfestigkeit der so hergestellten Segelmembran wird in der Regel nicht beeinträchtigt.

Wird die erfindungsgemäße Segelmembran zusätzlich mit einer nanopartikulären Schicht zur Wasserabweisung versehen, kann auf diese Art und Weise das Wasseraufnahmevermögen deutlich herabgesetzt werden. In diesem Fall kann auf eine durchgehende Beschichtung mit einem wasserabweisenden Material -wie auch auf eine Beschichtung zur Verminderung der Winddurchlässigkeit- ganz oder weitgehend verzichtet werden, so dass sich insgesamt eine deutliche Gewichtsverminderung sowohl des trocknen Segels als auch des sich im Einsatz befindlichen Segels ergibt.

Die Erfindung wird durch die beiliegenden Abbildungen näher beschrieben. Es zeigen:
- Figur 1: ein Segeltuchgewebe nach dem Kalandern in 60-facher Vergrößerung,
- Figur 2: ein Segeltuch nach dem Kalandern in 60facher Vergrößerung, und
- Figur 3: einen Ausschnitt aus Figur 2 in 300-facher Vergrößerung.

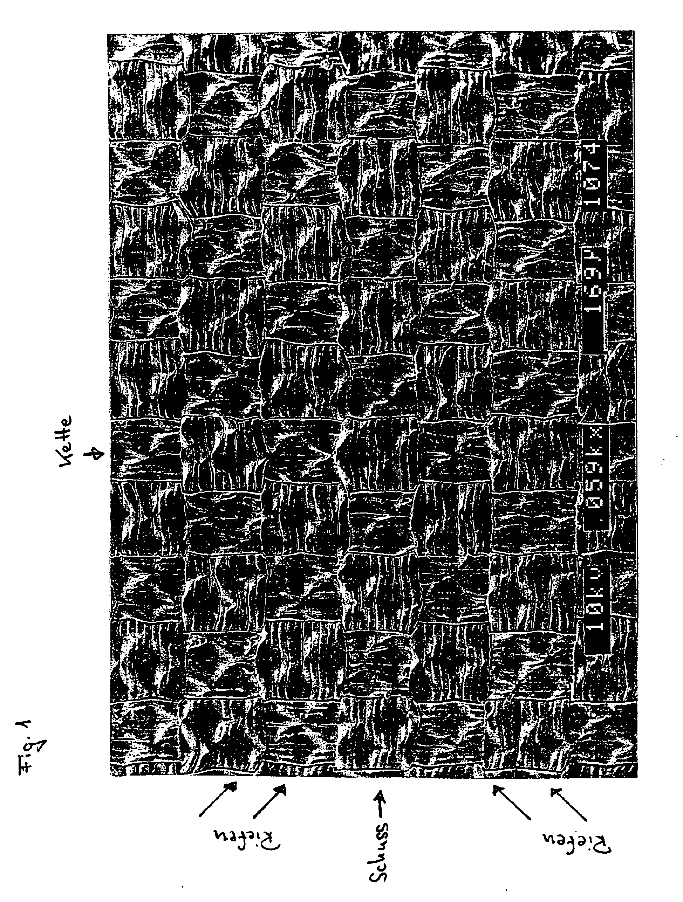

Figur 1 zeigt ein Segeltuch aus einem Polyamidgewebe, bei dem die senkrecht zueinander verlaufenden Kett- und Schussfäden in Leinenbindung deutlich zu erkennen sind. In dieses Gewebe wurden mit einer Kalanderwalze mit X-Riffelung ein X-Muster sich kreuzender Riefen eingeprägt, die diagonal zur Geweberichtung verlaufen. Die einzelnen Riefen verlaufen in einem Abstand von etwa 125µm zueinander, entsprechend 8 Riefen/mm. Die diagonal von links oben nach rechts unten und links unten nach rechts oben verlaufenden Riefenscharen kreuzen sich in einem Winkel von etwa 90°.Der Prägedruck betrug 300 N/mm, die Walzentemperatur war auf einen Wert von 200°C eingestellt.

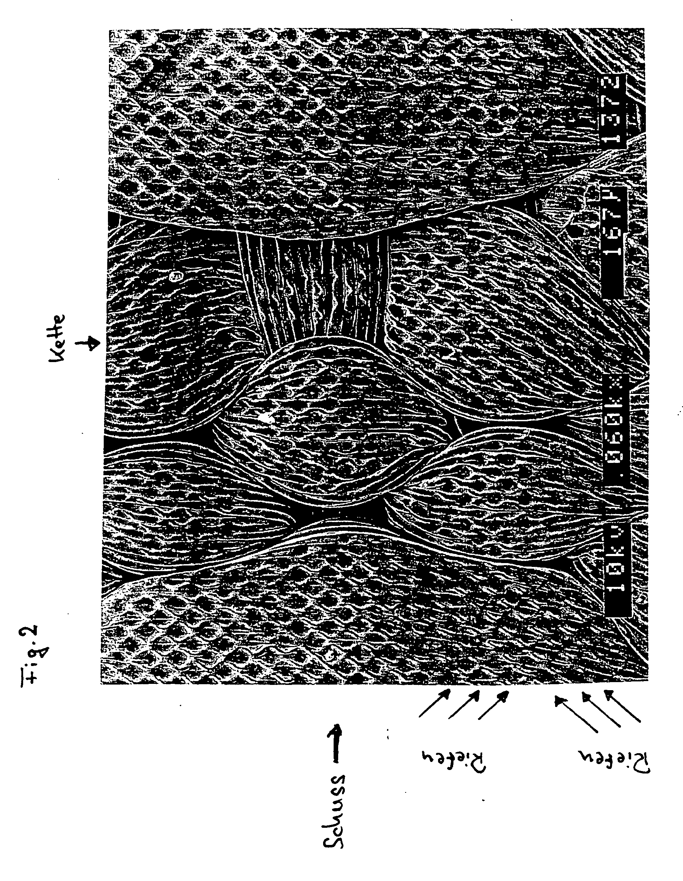

Figur 2 zeigt in 60-facher Vergrößerung ein Segeltuch aus einem Polyestergewebe mit eingelagerten Verstärkungsfäden aus Polyethylen, das eine X-Riffelung trägt, wie sie ähnlich für das Material von Figur 1 verwandt wurde. Der Prägedruck betrug 400 N/mm, die Walze war auf eine Temperatur von 140°C eingestellt. Die jeweiligen Riefenscharen sind parallel zueinander ausgerichtet und verlaufen diagonal von links oben nach rechts unten bzw. links unten nach rechts oben, wobei sie das X-Muster ausbilden. Der Kreuzungswinkel beträgt 95°, wobei der Winkel zur linken Seite der Abbildung (Schussrichtung) offen ist. Die Riefendichte beträgt 20 Riefen/mm, entsprechend einem Abstand von 50µm von Riefe zu Riefe einer parallel ausgerichteten Schar.

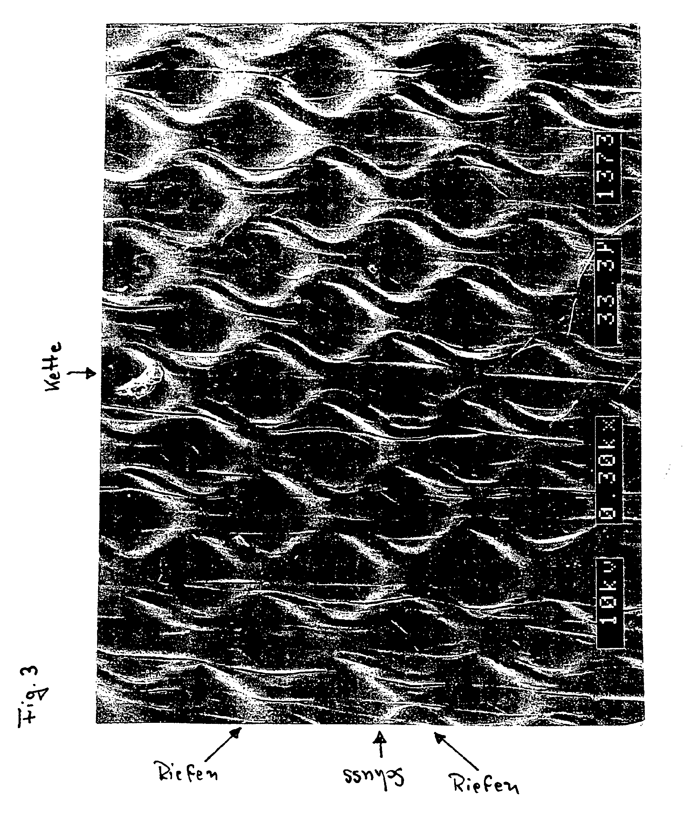

Figur 3 zeigt einen Ausschnitt aus Figur 2 in 300-facher Vergrößerung. Deutlich zu erkennen sind die diagonal zur Faserrichtung verlaufenden Kämme der sich kreuzenden Riefen und die eingeschlossenen rautenförmigen Eintiefungen in die Faseroberfläche, die sich kettenförmig in Faserrichtung fortsetzen.

Untersuchungen an einem Polyamid-Rohgewebe, das mit einer Riffelwalze mit 8 Linien/mm bei einer Temperatur von 200°C bearbeitet wurde ergab, nach dem Kalandern, eine deutliche Verminderung der Luftdurchlässigkeit bei 20 mm/WS von 600 bis 800 l/dm²/min auf 30 bis 40 l/dm²/min für die Rohware. Für die gefärbte Rohware ist eine weitere Verminderung zu erwarten. Im Falle des beschichteten Segeltuchs sinkt die Luftdurchlässigkeit auf 0, wobei für die kalanderte Ware die Beschichtung wesentlich geringer ausfällt. Eine geringere Beschichtung führt zu einer Gewichtsverminderung bei dem fertigen Segel mit der Möglichkeit, die Gewichtsersparnis für Verstärkungsmaßnahmen (Verstärkungsfäden) zu nutzen.

Zur Erzielung optimaler Werte ist grundsätzlich eine beidseitige Behandlung mit dem Riffelkalander erforderlich.

Zur Untersuchung des Luftwiderstands wurden Segelmembranproben im Windkanal mit einem MAV-Waagenprüfkörper (6-Komponenten-DMS-MAV-Waagen) bei einer Windgeschwindigkeit von 18 m/s geprüft. Bei dem MAV-Waagenprüfkörper handelte es sich um einen Trapezflügel kleiner Streckung mit symmetrischem Profil. Die Vorderkantenpfeilung betrug 36°, die Hinterkante war gerade. Die Flügelfläche wurde mit den Tuchmustern bespannt. Dabei wurde die Oberseite vollkommen bedeckt, die Unterseite nur zu ca. ¼.

Die Messungen ergaben für eine nicht-geriffelte Segelmembran einen Luftwiderstandsbeiwert von C_{Wa} von gemittelt 7,08 x 10⁻³, mit einer Kreuzriffelung von 10 Riefen/mm von 6,54 x 10⁻³ und mit 20 Riefen/mm von 6,4 x 10⁻³. Bei den Werten handelt es sich um gemittelte Werte aus 500 Messungen an acht Messpunkten.

Bei den Segelmembranproben handelte es sich um solche aus einem Polyester/Polyethylen-Mischgewebe.

## Patentansprüche

1. Segelmembran aus einem Gewebe aus synthetischen Fasern, wobei die Membran Mikrorauigkeiten aufweist, die in Form sich parallel erstreckender Riefen auf die Membranoberfläche auf- oder in diese eingebracht sind,
**dadurch gekennzeichnet,**
**dass** die Riefen ein Rechteck- oder Rautenmuster sich kreuzender Riefenscharen mit einer Dichte von 5 bis 25 Riefen/mm ausbilden.

2. Segelmembran nach Anspruch 1, **dadurch gekennzeichnet, dass** die Riefen eine Höhe aufweisen, die, gemessen von Talsohle zu Kammhöhe, 25 bis 75 % des Riefenabstandes von Kamm zu Kamm, vorzugsweise 40 bis 60 % des Riefenabstandes ausmacht.

3. Segelmembran nach Anspruch 1 oder 2, **dadurch gekennzeichnet, dass** sie 8 bis 20 Riefen/mm aufweist.

4. Segelmembran aus einem Gewebe aus synthetischen Fasern nach einem der vorstehenden Ansprüche, **dadurch gekennzeichnet, dass** die Riefen einen Winkel von 30 bis 60°, vorzugsweise von etwa 45° zum Verlauf der Kettfäden haben.

5. Segelmembran nach einem der vorstehenden Ansprüche, **dadurch gekennzeichnet, dass** das Gewebe mit einer oder mehreren Folien kaschiert ist.

6. Segelmembran nach einem der vorstehenden Ansprüche mit beidseitig auf- oder eingebrachten Riefen.

7. Segelmembran nach Anspruch 1, **dadurch gekennzeichnet, dass** die sich kreuzenden Riefen einen Kreuzungswinkel von 80° bis 120° aufweisen.

8. Segelmembran nach einem der vorstehenden Ansprüche, **gekennzeichnet durch** eine Hydrophobierung, vorzugsweise **durch** ein Perfluorpolyalkylen und/oder eine nanopartikuläre Beschichtung.

9. Verfahren zur Herstellung einer Segelmembran aus einem Gewebe aus synthetischen Fasern nach einem der vorstehenden Ansprüche mit den Schritten
- Bereitstellen eines Rohgewebes aus synthetischen Fasern,
- ggf. Färben und/oder Ausrüsten des Rohgewebes und
- Kalandern des Rohgewebes bei einem Druck von wenigstens 50 N/mm, vorzugsweise von 100 bis 600 N/mm, mit einer Riffelwalze zur Einprägung von sich parallel erstreckenden Riefen in die Gewebestruktur von wenigstens einer Seite.

10. Verfahren nach Anspruch 9, **dadurch gekennzeichnet, dass** vor dem Kalandern das Rohgewebe mit einer oder mehreren Folien kaschiert wird.

11. Verfahren nach Anspruch 9 oder 10, **dadurch gekennzeichnet, dass** das Gewebe von beiden Seiten kalandert wird.

12. Verfahren nach Anspruch 11, **dadurch gekennzeichnet, dass** das Gewebe vor dem Kalandern einer Wasserdampfbehandlung bei bis zu 110°C unterzogen wird.

13. Verfahren nach einem der Ansprüche 9 oder 12, **dadurch gekennzeichnet, dass** das Gewebe vor dem Kalandern hydrophobiert wird.

14. Aus der Segelmembran eines der Ansprüche 1 bis 8 gefertigtes Segel.

## Claims

1. Sail membrane made of a woven fabric of synthetic fibers, said membrane having microroughnesses in the form of parallelly extending grooves deposited on or integrated into said membrane surface
**characterized in that**
the grooves form a rectangular or diamond patton consisting of sets of grooves crossing each other with a density of 5 to 25 grooves/mm.

2. Sail membrane according to claim 1, **characterized in that** the grooves, measured from valley bottom to top of crest, have a height amounting to 25 to 75 % of the groove spacing from crest to crest, preferably 40 to 60 % of the groove spacing.

3. Sail membrane according to claim 1 or 2, **characterized in that** said membrane has 8 to 20 grooves/mm.

4. Sail membrane made of a woven fabric of synthetic fibers according to any one of the above claims, **characterized in that** the grooves are arranged at an angle of 30 to 60°, preferably of approximately 45° in relation to the extension of the warp yarns.

5. Sail membrane according to any one of the above claims, **characterized in that** the fabric is laminated with one or more sheets.

6. Sail membrane according to any one of the above claims with grooves deposited on or integrated into both sides.

7. Sail membrane according to claim 7, **characterized in that** the intersecting grooves have an intersection angle of between 80° and 120°.

8. Sail membrane according to any one of the above claims, **characterized by** hydrophobization, preferably achieved by means of perfluoropolyalkylene and/or a nanoparticle coating.

9. Method for manufacturing of a sail membrane of a woven fabric of synthetic fibers according to any one of the above claims involving the steps
- Providing a gray cloth consisting of synthetic fibers,
- optionally dyeing and/or finishing the gray cloth and
- calendering the gray cloth at a pressure of at least 50 N/mm, preferably 100 to 600 N/mm, by means of a corrugated roll to emboss parallelly extending grooves into the woven fabric structure on at least one side.

10. Method according to claim 9, **characterized in that** prior to calendaring the gray cloth is laminated with one or more sheets.

11. Method according to claim 9 or 10, **characterized in that** the woven fabric is calendered on both sides.

12. Method according to claim 11, **characterized in that** the woven fabric is subjected to a water vapor treatment at a temperature of up to 110°C prior to calendering.

13. Method according to one of the claims 9 or 12, **characterized in that** the woven fabric is hydrophobized prior to calendering.

14. Sail manufactured from the sail membrane of any one of the claims 1 to 8.

## Revendications

1. Membrane pour voile en un tissu de fibres synthétiques, la membrane comportant des microrugosités qui, sous forme de cannelures s'étendant parallèlement, sont réalisées sur la surface de la membrane ou introduites dans cette dernière, **caractérisée en ce que** les cannelures forment un motif en rectangles ou en losanges de groupes de cannelures qui se croisent, avec une densité de 5 à 25 cannelures par millimètre.

2. Membrane pour voile selon la revendication 1, **caractérisée en ce que** les cannelures ont une hauteur qui, mesurée du fond de vallée à la hauteur de crête, est de 25 à 75% de l'écartement crête à crête des cannelures, de préférence de 40 à 60 % de l'écartement des cannelures.

3. Membrane pour voile selon la revendication 1, **caractérisée en ce qu'**elle comprend 8 à 20 cannelures par millimètre.

4. Membrane pour voile selon en un tissu de fibres synthétiques selon l'une des revendications précédentes, **caractérisée en ce que** les cannelures font un angle de 30 à 60°, de préférence d'environ 45°, avec l'orientation des fils de chaîne.

5. Membrane pour voile selon l'une des revendications précédentes, **caractérisée en ce que** le tissu est contrecollé d'une ou plusieurs feuilles.

6. Membrane pour voile selon l'une des revendications précédentes, comportant des cannelures appliquées ou introduites sur les deux côtés.

7. Membrane pour voile selon la revendication 1, **caractérisée en ce que** les cannelures qui se croisent présentent un angle de croisement de 80 à 120°.

8. Membrane pour voile selon l'une des revendications précédentes, **caractérisée par** une hydrophobisation, de préférence par un perfluoropolyalkylène, et/ou un revêtement nanoparticulaire.

9. Procédé de fabrication d'une membrane pour voile en un tissu de fibres synthétiques selon l'une des revendications précédentes, comportant les étapes suivantes
- mise à disposition d'un tissu brut en fibres synthétiques,
- éventuellement, teinture et/ou apprêtage du tissu brut, et
- calandrage du tissu brut sous une pression d'au moins 50 N/mm, de préférence de 100 à 600 N/mm, avec un cylindre cannelé pour incruster des cannelures s'étendant parallèlement dans la structure du tissu, à partir d'au moins un côté.

10. Procédé selon la revendication 9, **caractérisé en ce que** le tissu brut est, avant les calandrages, contrecollé d'une ou plusieurs feuilles.

11. Procédé selon la revendication 9 ou 10, **caractérisé en ce que** le tissu est calandré des deux côtés.

12. Procédé selon la revendication 11, **caractérisé en ce que** le tissu, avant le calandrage, est soumis à un traitement à la vapeur d'eau à une température allant jusqu'à 110°C.

13. Procédé selon l'une des revendications 9 ou 12, **caractérisé en ce que** le tissu est hydrophobisé avant le calandrage.

14. Voile fabriquée à partir de la membrane pour voile selon l'une des revendications 1 à 8.
